# EUROPÄISCHE PATENTSCHRIFT

(11) **EP 2 528 794 B1**
(45) Veröffentlichungstag und Bekanntmachung des Hinweises auf die Patenterteilung: **20.05.2015**
(21) Anmeldenummer: 11703165.8
(22) Anmeldetag: 28.01.2011
(51) Int. Cl.: B60K 6/46, B60Q 5/00, B60Q 9/00, G10K 15/04, B60W 20/00

(54) **VERFAHREN ZUM BETREIBEN EINES HYBRIDFAHRZEUGES**
METHOD FOR OPERATING A HYBRID VEHICLE
PROCÉDÉ POUR FAIRE FONCTIONNER UN VÉHICULE HYBRIDE

(30) Priorität: 28.01.2010 AT 1132010
(43) Veröffentlichungstag der Anmeldung: 05.12.2012
(73) Patentinhaber: AVL List GmbH, 8020 Graz (AT)
(72) Erfinder: KAPUS, Paul, A-8111 Judendorf (AT)
(74) Vertreter: Babeluk, Michael
(86) Internationale Anmeldenummer: PCT/EP2011/051201
(87) Internationale Veröffentlichungsnummer: WO 2011/092282

(56) Entgegenhaltungen:
- WO-A1-2009/011763
- WO-A1-2010/000511
- DE-A1- 19 643 030
- JP-A- 2000 106 514
- JP-A- 2009 040 318

## Beschreibung

Die Erfindung betrifft ein Verfahren zum Betreiben eines Hybridfahrzeuges, insbesondere eines Serienhybridfahrzeuges, mit zumindest einer elektrischen Maschine und zumindest einer Brennkraftmaschine, wobei die Brennkraftmaschine in zumindest einem ersten Betriebsbereich des Fahrzeuges insbesondere stationär betrieben und in zumindest einem zweiten Betriebsbereich des Fahrzeuges deaktiviert wird, wobei während des zweiten Betriebsbereiches ein Grundgeräusch künstlich erzeugt wird, welches dem Betriebsgeräusch der Brennkraftmaschine entspricht.

Elektrisch betriebene Fahrzeuge weisen ein nur sehr geringes Grundgeräusch auf. Daraus ergibt sich das Problem der eingeschränkten akustischen Wahrnehmbarkeit für andere Verkehrsteilnehmer, insbesondere für Fußgänger und Radfahrer. Ein weiterer Nachteil ist, dass der Fahrer nur ungenügend akustische Rückmeldungen über den Fahrzustand des Fahrzeuges erhält. Bei Hybridfahrzeugen mit seriell zuschaltbarer Brennkraftmaschine ergibt sich ein unerwartetes, nicht vorhersehbares Geräusch, welches vom Fahrzustand unabhängig ist, wenn die Brennkraftmaschine stationär betrieben wird.

Aus den Veröffentlichungen US 7,501,934 B, WO 08/024361 A1, EP 1 731 372 A1, JP 07-322403 A, JP 06-296400 A, WO 00/12354 A1, EP 753 752 A1 und US 5,635,903 A ist es bekannt, während des Betriebes eines Elektrofahrzeuges ein gespeichertes Motorengeräusch einer Brennkraftmaschine einzuspielen, wobei eine von der Betriebsart abhängige Sounderzeugung erfolgt.

Die Druckschrift WO 2010/000511 A1 beschreibt ein Verfahren und eine Vorrichtung der eingangs gekennzeichneten zur Erzeugung einer fühlbaren Fahrerrückmeldung bezüglich der Betriebsbereitschaft eines Fahrzeuges, insbesondere Hybridfahrzeug, wobei in Abhängigkeit des Zustandes eines Antriebstrangs des Fahrzeugs die Fahrerrückmeldung erzeugt wird. Dabei wird als akustische Meldung ein moduliertes Motorgeräusch erzeugt, welches entweder gespeichert oder künstlich erzeugt wird, wobei dem Fahrer die Wahrnehmung einer üblichen Brennkraftmaschine gegeben wird.

Die JP 2009-040318 A beschreibt ein Verfahren zum Betreiben eines Hybridfahrzeuges, wobei abhängig von der Fahrzeuggeschwindigkeit ein Fahrgeräusch über Lautsprecher im Bereich der Front des Fahrzeuges abgestrahlt wird.

Aus keiner der Druckschriften ist es bekannt, dass Grundgeräusch zumindest abschnittsweise invers dem Betriebsgeräusch der Brennkraftmaschine dynamisch nachzuführen

Aufgabe der Erfindung ist es, bei einem Hybridfahrzeug mit diskontinuierlich betriebener Brennkraftmaschine eine stetige Schallabstrahlung unter Vermeidung von sprunghaften Schalländerungen zu ermöglichen.

Erfindungsgemäß wird dies dadurch erreicht, dass das Grundgeräusch zumindest abschnittsweise invers dem Betriebsgeräusch der Brennkraftmaschine dynamisch nachgeführt wird.

Vorzugsweise ist dabei vorgesehen, dass während des ersten Betriebsbereiches das Grundgeräusch abgeschaltet wird. Das Grundgeräusch wird dabei vorteilhafterweise digital erzeugt.

In Weiterführung der Erfindung kann vorgesehen sein, dass dem künstlich erzeugten Grundgeräusch und dem Betriebsgeräusch der Brennkraftmaschine ein künstlich, vorzugsweise digital erzeugtes Fahrgeräusch überlagert wird, wobei das Fahrgeräusch in Abhängigkeit der Fahrgeschwindigkeit und/oder der Drehzahl der elektrischen Maschine und/oder der Fahrpedalstellung und/oder des Lastmomentes erzeugt wird. Dadurch, dass dem Grundgeräusch ein von der Fahrsituation abhängiges Fahrgeräusch überlagert wird, erhält der Fahrer wie bei konventionellen mit Brennkraftmaschinen angetriebenen Fahrzeugen eine Rückmeldung des Last- und Drehzahlzustandes. Das Grundgeräusch und/oder das Fahrgeräusch kann innerhalb oder außerhalb des Fahrgastraumes des Fahrzeuges abgestrahlt werden.

Wenn die Brennkraftmaschine deaktiviert ist, wird das abgespeicherte Grundgeräusch der Brennkraftmaschine über eine Schallerzeugungseinrichtung über einen oder mehrere Lautsprecher, welche außerhalb und/oder im Innenraum des Fahrzeuges angeordnet sein können, eingespielt, wobei die Lautstärke in Abhängigkeit zumindest eines Betriebsparameters veränderbar sein kann. Beispielsweise kann eine geringe Lautstärke zugeschaltet werden, wenn das Zuschalten der Brennkraftmaschine zeitlich noch fern ist. Andererseits kann die Originallautstärke angehoben werden, wenn das Zuschalten der Brennkraftmaschine zeitlich nah ist. Da die Brennkraftmaschine im allgemeinen bei Unterschreiten eines definierten Mindestladezustandes der aufladbaren Batterie aktiviert wird, kann der Batterieladezustand als Parameter für die Lautstärke verwendet werden.

Wenn die Brennkraftmaschine anläuft, wird die Schallerzeugungseinrichtung deaktiviert und durch das reale Betriebsgeräusch der Brennkraftmaschine ersetzt. Umgekehrt wird beim Abschalten der Brennkraftmaschine die Schallerzeugungseinrichtung wieder - gegebenenfalls mit entsprechender Adaptierung der Lautstärke - eingeschaltet. Dadurch ergibt sich ein gleichartiges Grundgeräusch des Fahrzeuges, bei dem das Ein- und Ausschalten der Brennkraftmaschine akustisch unauffällig bleibt.

Das digital erzeugte Geräusch kann auch teilweise dazu dienen Teile des Betriebsgeräusches der Brennkraftmaschine zu annullieren (active noise cancellation). Um dies zu erreichen ist vorgesehen, dass während des ersten Betriebsbereiches das Grundgeräusch phaseninvers zum Betriebsgeräusch der Brennkraftmaschine abgestrahlt wird.

Die Erfindung wird im Folgenden anhand der Figuren näher erläutert. Es zeigen
Fig. 1 ein Betriebsdiagramm des Hybridfahrzeuges und
Fig. 2 das Detail II aus Fig. 1.

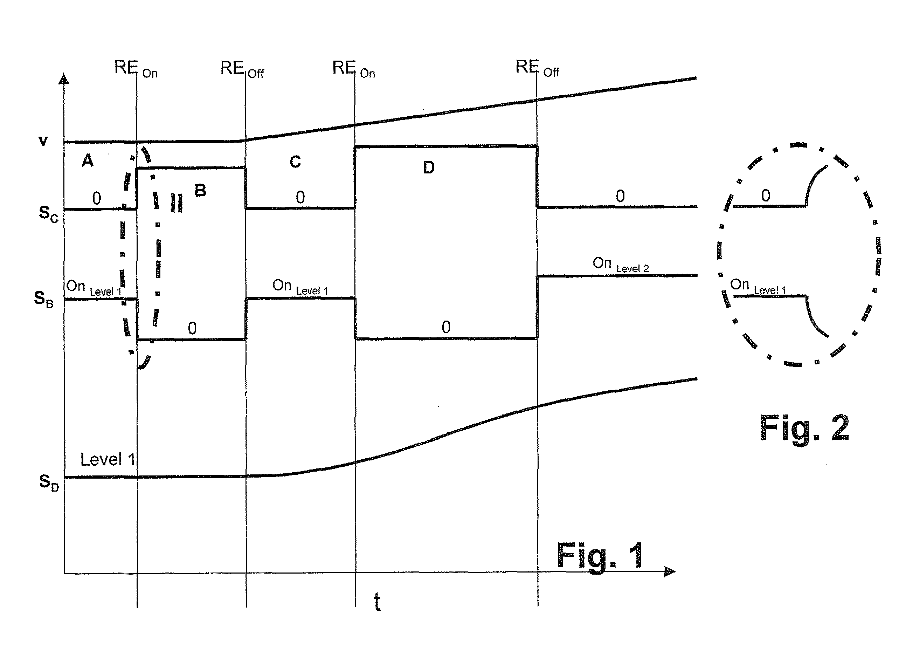

Die Fig. 1 zeigt ein Diagramm, in welchem für ein Ausführungsbeispiel die Fahrgeschwindigkeit v, das Betriebsgeräusch S_{c} der Brennkraftmaschine, das künstlich erzeugte Grundgeräusch S_{B} und das künstlich erzeugte Fahrgeräusch S_{D} über der Zeit t dargestellt ist. Einschaltpunkte der Brennkraftmaschine sind mit RE_{On} und die Ausschaltpunkte mit RE_{Off} bezeichnet.

In den ersten Betriebsbereichen B, D des Fahrzeuges ist die Brennkraftmaschine aktiviert und erzeugt ein dem Lastzustand entsprechendes Betriebsgeräusch S_{C}, wobei im Betriebsbereich D das Betriebsgeräusch S_{C} höher ist als im Betriebsbereich B. In zweiten Betriebsbereichen A und C des Fahrzeuges ist die Brennkraftmaschine deaktiviert und erzeugt somit kein Geräusch. In diesen Betriebsbereichen wird durch die Schallerzeugungseinrichtung ein künstliches Geräusch S_{B} erzeugt, welches in der Qualität und im Niveau etwa dem Betriebsgeräusch S_{C} der Brennkraftmaschine entspricht. Dadurch ergibt sich ein gleichartiges Betriebsgeräusch des Fahrzeugs, bei dem das Ein- und Ausschalten der Brennkraftmaschine akustisch unauffällig bleibt.

Weist die Brennkraftmaschine mehrere Betriebspunkte mit unterschiedlichen Schallniveaus auf, wie in Fig. 1 in den Betriebsbereichen B und D eingezeichnet ist, so kann auch das künstliche Grundgeräusch S_{B} an das unterschiedliche Niveau des Betriebsgeräusches S_{C} der Brennkraftmaschine angepasst werden, wie durch die Niveaus des Grundgeräusches On_{Level 1} und On_{Level 2} angedeutet ist.

Um dem Fahrer eine übergangslose Schallabstrahlung zu vermitteln, kann das Grundgeräusch S_{B} invers dem Betriebsgeräusch S_{C} der Brennkraftmaschine nachgeführt sein, wie in Fig. 2 dargestellt ist. Dadurch werden Spitzen oder Abstufungen in der Geräuschabstrahlung vermieden.

Um ein akustisches Feedback über den Fahrzustand bereitzustellen, kann das Grundgeräusch S_{B} durch ein künstlich erzeugtes Fahrgeräusch S_{D} überlagert werden, wobei die Fahrsituation durch die Fahrgeschwindigkeit v und/oder die Drehzahl des Elektromotors, die Fahrpedalstellung, das Drehmoment oder ähnliches charakterisiert werden kann. Dadurch erhält der Fahrer wie bei konventionellen über Brennkraftmaschinen betriebenen Fahrzeugen eine akustische Rückmeldung über den aktuellen Fahrzustand.

## Patentansprüche

1. Verfahren zum Betreiben eines Hybridfahrzeuges, insbesondere eines Serienhybridfahrzeuges, mit zumindest einer elektrischen Maschine und zumindest einer Brennkraftmaschine, wobei die Brennkraftmaschine in zumindest einem ersten Betriebsbereich (B, D) des Fahrzeuges insbesondere stationär betrieben und in zumindest einem zweiten Betriebsbereich (A, C) des Fahrzeuges deaktiviert wird, wobei während des zweiten Betriebsbereiches (A, C) ein Grundgeräusch (S_{B}) künstlich erzeugt wird, welches dem Betriebsgeräusch (S_{C}) der Brennkraftmaschine entspricht, **dadurch gekennzeichnet, dass** das Grundgeräusch (S_{B}) zumindest abschnittsweise invers dem Betriebsgeräusch (S_{C}) der Brennkraftmaschine dynamisch nachgeführt wird.

2. Verfahren nach Anspruch 1, **dadurch gekennzeichnet, dass** während des ersten Betriebsbereiches (B, D) das Grundgeräusch (S_{B}) abgeschaltet wird.

3. Verfahren nach Anspruch 1 oder 2, **dadurch gekennzeichnet, dass** das Grundgeräusch (S_{B}) digital erzeugt wird.

4. Verfahren nach einem der Ansprüche 1 bis 3, **dadurch gekennzeichnet, dass** das Grundgeräusch (S_{B}) in Abhängigkeit zumindest eines Parameters, vorzugsweise des Ladezustandes eines elektrischen Speichers, verändert wird.

5. Verfahren nach einem der Ansprüche 1 bis 4, **dadurch gekennzeichnet, dass** dem künstlich erzeugten Grundgeräusch (S_{B}) und dem Betriebsgeräusch (S_{C}) der Brennkraftmaschine ein künstlich, vorzugsweise digital erzeugtes Fahrgeräusch überlagert wird, wobei das Fahrgeräusch (S_{D}) in Abhängigkeit der Fahrgeschwindigkeit (v) und/oder der Drehzahl der elektrischen Maschine und/oder der Fahrpedalstellung und/oder des Lastmomentes erzeugt wird.

6. Verfahren nach Anspruch 5, **dadurch gekennzeichnet, dass** das Fahrgeräusch (S_{D}) in Abhängigkeit zumindest eines Parameters, vorzugsweise des Ladezustandes eines elektrischen Speichers, verändert wird.

7. Verfahren nach einem der Ansprüche 1 bis 6, **dadurch gekennzeichnet, dass** das Grundgeräusch (S_{B}), und/oder das Fahrgeräusch (S_{D}) in den Innenraum des Fahrzeuges abgestrahlt wird.

8. Verfahren nach einem der Ansprüche 1 bis 7, **dadurch gekennzeichnet, dass** das Grundgeräusch (S_{B}) und/oder das Fahrgeräusch (S_{D}) außerhalb des Fahrzeuges abgestrahlt wird.

9. Verfahren nach einem der Ansprüche 1 bis 8, **dadurch gekennzeichnet, dass** während des ersten Betriebsbereiches (B, D) das Grundgeräusch (S_{B}) phaseninvers zum Betriebsgeräusch (S_{C}) der Brennkraftmaschine abgestrahlt wird.

10. Vorrichtung zur Durchführung des Verfahrens nach einem der Ansprüche 1 bis 8 zum Betreiben eines Hybridfahrzeuges, insbesondere eines Serienhybridfahrzeuges, mit zumindest einer elektrischen Maschine und zumindest einer Brennkraftmaschine, die in zumindest einem ersten Betriebsbereich (B, D) insbesondere stationär betreibbar ist und die in zumindest einem zweiten Betriebsbereich (A, C) des Fahrzeuges deaktivierbar ist, die Vorrichtung eine Schallabstrahleinrichtung, eine synthetische Schallerzeugungseinrichtung und eine Steuereinrichtung aufweist, wobei die Steuereinrichtung einen Eingang für zumindest einen Betriebsparameter der Brennkraftmaschine aufweist, und wobei die Schallerzeugungseinrichtung in Abhängigkeit des Betriebsparameters durch die Steuereinrichtung aktivier- und deaktivierbar ist, **dadurch gekennzeichnet, dass** das Grundgeräusch (S_{B}) zumindest abschnittsweise invers dem Betriebsgeräusch (S_{C}) der Brennkraftmaschine dynamisch nachführbar ist.

11. Vorrichtung nach Anspruch 10, **dadurch gekennzeichnet, dass** die Steuereinrichtung einen Eingang für zumindest einen Betriebsparameter des Fahrzeuges aufweist, wobei die Schallerzeugungseinrichtung in Abhängigkeit des Betriebsparameters des Fahrzeuges durch die Steuerungseinrichtung ansteuerbar ist.

12. Vorrichtung nach Anspruch 10 oder 11, **dadurch gekennzeichnet, dass** die Schallerzeugungseinrichtung in den Innenraum des Fahrzeuges mündet.

13. Vorrichtung nach einem der Ansprüche 10 bis 12, **dadurch gekennzeichnet, dass** die Schallerzeugungseinrichtung außerhalb des Fahrzeuges angeordnet ist.

## Claims

1. A method for operating a hybrid vehicle, especially a series-produced hybrid vehicle, comprising at least one electric motor and at least one internal combustion engine, with the internal combustion engine being operated in at least one first operating range (B, D) of the vehicle, especially in a stationary manner, and being deactivated in at least one second operating range (A, C) of the vehicle, with a basic sound (S_{B}) being artificially generated during the second operating range (A, C), which basic sound corresponds to the operating sound (S_{C}) of the internal combustion engine, **characterised in that** the basic sound (S_{B}) will dynamically be applied at least in part in an inverse manner to the operating sound (S_{C}) of the internal combustion engine.

2. A method according to claim 1, **characterised in that** the basic sound (S_{B}) will be switched off during the first operating range (B, D).

3. A method according to claim 1 or 2, **characterised in that** the basic sound (S_{B}) is generated digitally.

4. A method according to one of the claims 1 to 3, **characterised in that** the basic sound (S_{B}) is changed depending on at least one parameter, preferably the charging state of an electric storage unit.

5. A method according to one of the claims 1 to 4, **characterised in that** an artificial, preferably digitally produced, driving sound is superimposed on the artificially generated basic sound (S_{B}) and the operating sound (S_{C}) of the internal combustion engine, with the driving sound (S_{D}) being generated depending on the driving speed (v) and/or the speed of the electric motor and/or the accelerator pedal position and/or the load torque.

6. A method according to claim 5, **characterised in that** the driving sound (S_{D}) is changed depending on at least one parameter, preferably the charging state of an electric storage unit.

7. A method according to one of the claims 1 to 6, **characterised in that** the basic sound (S_{B}) and/or the driving sound (S_{D}) is emitted into the interior space of the vehicle.

8. A method according to one of the claims 1 to 7, **characterised in that** the basic sound (S_{B}) and/or the driving sound (S_{D}) is emitted to the outside of the vehicle.

9. A method according to one of the claims 1 to 8, **characterised in that** the basic sound (S_{B}) is emitted in a phase-inverse manner in relation to the operating sound (S_{C}) of the internal combustion engine during the first operating range (B, D).

10. An apparatus for performing the method according to one of the claims 1 to 8 for operating a hybrid vehicle, especially a series-produced hybrid vehicle, comprising at least one electric motor and at least one internal combustion engine which can be operated in at least one first operating range (B, D) of the vehicle, especially in a stationary manner, and which can be deactivated in at least one second operating range (A, C) of the vehicle, with the apparatus comprising a sound emission device, a synthetic sound generation device and a control device, with the control device having an input for at least one operating parameter of the internal combustion engine, and with the sound generation device being activatable and deactivatable by the control device depending on the operating parameter, **characterised in that** the basic sound (S_{B}) will dynamically be applied at least in part in an inverse manner to the operating sound (S_{C}) of the internal combustion engine.

11. An apparatus according to claim 10, **characterised in that** the control device comprises an input for at least one operating parameter of the vehicle, with the sound generation device being triggerable by the control device depending on the operating parameter of the vehicle.

12. An apparatus according to claim 10 or 11, **characterised in that** the sound generation device opens into the interior space of the vehicle.

13. An apparatus according to one of the claims 10 to 12, **characterised in that** the sound generation device is arranged outside of the vehicle.

## Revendications

1. Procédé de gestion d'un véhicule hybride, en particulier d'un véhicule hybride série comportant au moins un moteur électrique et au moins un moteur à combustion interne, le moteur à combustion interne étant actionné dans au moins une première plage de fonctionnement (B, D) du véhicule en particulier en mode stationnaire et étant désactivé dans au moins une seconde plage de fonctionnement (A, C) du véhicule, selon lequel pendant la seconde plage de fonctionnement (A, C) est produit artificiellement un bruit de fond (S_{B}), qui correspond au bruit de fonctionnement (S_{C}) du moteur à combustion interne,
**caractérisé en ce que**
le bruit de fond (S_{B}) suit dynamiquement de façon inverse au moins par segments le bruit de fonctionnement (S_{C}) du moteur à combustion interne.

2. Procédé conforme à la revendication 1,
**caractérisé en ce que**
pendant la première plage de fonctionnement (B, D) le bruit de fond (S_{B}) est coupé.

3. Procédé conforme à la revendication 1 ou 2,
**caractérisé en ce que**
le bruit de fond (S_{B}) est produit de manière numérique.

4. Procédé conforme à l'une des revendications 1 à 3,
**caractérisé en ce que**
le bruit de fond (S_{B}) est modifié en fonction d'au moins un paramètre, de préférence l'état de charge d'un accumulateur électrique.

5. Procédé conforme à l'une des revendications 1 à 4,
**caractérisé en ce qu'**
au bruit de fond (S_{B}) produit artificiellement et au bruit de fonctionnement (S_{C}) du moteur à combustion interne est superposé un bruit de roulement artificiel de préférence produit de manière numérique, ce bruit de roulement (S_{D}) étant produit en fonction de la vitesse de déplacement (v) et/ou de la vitesse de rotation du moteur électrique et/ou de la position de la pédale d'accélérateur et/ou du couple de charge.

6. Procédé conforme à la revendication 5,
**caractérisé en ce que**
le bruit de roulement (S_{D}) est modifié en fonction d'au moins un paramètre, de préférence l'état de charge d'un accumulateur électrique.

7. Procédé conforme à l'une des revendications 1 à 6,
**caractérisé en ce que**
le bruit de fond (S_{B}) et/ou le bruit de roulement (S_{D}) sont diffusés dans l'habitacle du véhicule.

8. Procédé conforme à l'une des revendications 1 à 7,
**caractérisé en ce que**
le bruit de fond (S_{B}) et/ou le bruit de roulement (S_{D}) sont diffusés à l'extérieur du véhicule.

9. Procédé conforme à l'une des revendications 1 à 8,
**caractérisé en ce que**
pendant la première plage de fonctionnement (B, D) le bruit de fond (S_{B}) est diffusé en inversion de phase par rapport au bruit de fonctionnement (S_{C}) du moteur à combustion interne.

10. Dispositif permettant la mise en oeuvre du procédé conforme à l'une des revendications 1 à 8, pour la gestion d'un véhicule hybride, en particulier d'un véhicule hybride série comprenant au moins un moteur électrique et au moins un moteur à combustion interne qui peut être actionné en particulier dans un mode stationnaire dans au moins une première plage de fonctionnement (B, D) et qui peut être désactivé dans au moins une seconde plage de fonction (A, C) du véhicule, ce dispositif comprenant un dispositif de diffusion de son, un dispositif de production de son et un dispositif de commande, le dispositif de commande comprenant une entrée pour au moins un paramètre de fonctionnement du moteur à combustion interne et le dispositif de diffusion de son pouvant être activé ou désactivé en fonction du paramètre de fonctionnement par le dispositif de commande,
**caractérisé en ce que**
le bruit de fond (S_{B}) peut suivre dynamiquement de façon inverse au moins par segments le bruit de fonctionnement (S_{C}) du moteur à combustion interne.

11. Dispositif conforme à la revendication 10,
**caractérisé en ce que**
le dispositif de commande comprend une entrée pour au moins un paramètre de fonctionnement du véhicule, le dispositif de production de sons pouvant être commandé par le dispositif de commande en fonction du paramètre de fonctionnement du véhicule.

12. Dispositif conforme à la revendication 10 ou 11,
**caractérisé en ce que**
le dispositif de production de son débouche dans l'habitacle du véhicule.

13. Dispositif conforme à l'une des revendications 10 à 12,
**caractérisé en ce que**
le dispositif de production de son est monté à l'extérieur du véhicule.
